Europäisches Patentamt

European Patent Office

Office européen des brevets

(11) Numéro de publication: **0 061 365**
**B1**

(12) **FASCICULE DE BREVET EUROPEEN**

(45) Date de publication du fascicule du brevet: **27.12.84**

(21) Numéro de dépôt: **82400283.6**

(22) Date de dépôt: **18.02.82**

(51) Int. Cl.³: **B 62 K 19/30**

(54) **Dispositif de fixation d'un dérailleur sur une patte de cadre.**

(30) Priorité: **23.03.81 FR 8105718**

(43) Date de publication de la demande:
**29.09.82 Bulletin 82/39**

(45) Mention de la délivrance du brevet:
**27.12.84 Bulletin 84/52**

(84) Etats contractants désignés:
**DE GB IT**

(56) Documents cités:
**DE-C- 826 831**
**FR-A-1 020 378**
**FR-A-1 081 884**
**FR-E- 27 937**
**GB-A- 818 266**

(73) Titulaire: **HURET ET SES FILS Société dite:**
**60 Avenue Félix Faure**
**F-92000 Nanterre (FR)**

(72) Inventeur: **Huret, Roger**
**Décédé (FR)**

(74) Mandataire: **Moncheny, Michel et al**
**c/o Cabinet Lavoix 2 Place d'Estienne d'Orves**
**F-75441 Paris Cedex 09 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

### Description

La présente invention concerne les dérailleurs pour cycles et plus particulièrement leur montage sur le cadre.

On sait qu'en général un dérailleur est porté par une plaque support qui est elle-même fixée sur la patte de cadre arrière de la bicyclette. Le montage de l'ensemble constitué par le dérailleur et sa plaque support s'effectue en deux temps. Tout d'abord cet ensemble est mis en place sur la patte de cadre et fixé sur cette dernière au moyen d'un dispositif à vis et écrou. Puis, lors du montage du moyeu de roue, la plaque support est fixée sur la patte de cadre en même temps que le moyeu.

Le fait de fixer dans un premier temps la plaque support sur la patte de cadre au moyen d'un dispositif à vis et écrou offre de nombreux inconvénients:

— tout d'abord il est nécessaire d'utiliser un écrou spécial qui doit comporter deux épaulements qui assurent le guidage dans la fente ou la glissière de la patte de cadre, et deux ailes ou oreilles qui viennent prendre appui sur la face arrière de cette même patte de cadre. Cet écrou est donc relativement coûteux puisque sa fabrication implique une opération de décolletage;

— un autre inconvénient réside dans le fait que lors de l'assemblage du dérailleur et de sa plaque support, on doit monter sur cette dernière la vis et l'écrou qui permettront d'assurer ultérieurement la fixation sur la patte de cadre. Ceci implique par conséquent un premier serrage peu important de l'écrou et de la vis, suivi d'un desserrage pour permettre le montage sur la patte de cadre, et un nouveau serrage pour assurer la fixation. Il est à noter que cette deuxième opération de serrage est délicate puisqu'elle nécessite l'utilisation de deux clés et qu'il est nécessaire d'assurer simultanément le positionnement correct de la plaque support par rapport à la patte de cadre. Il existe également un risque, lors des diverses manipulations du dérailleur, de voir la vis et l'écrou se desserrer et se détacher de la plaque support.

Le but de cette invention est de proposer un dispositif de montage du dérailleur et de sa plaque support sur la patte de cadre, qui ne présente pas ces divers inconvénients et qui soit plus simples moins coûteux et dont le montage soit facilité.

Par rapport au brevet FR—A—1020378 qui décrit déja un dispositif de fixation d'un support de dérailleur sur une patte de cadre de bicyclette, le support comportant un moyeu de centrage par rapport à la patte de cadre, ce résultat est obtenu un prévoyant en outre, sur la plaque support du dérailleur, une attache élastique fixée à demeure et adaptée pour coopérer avec la patte de cadre, dans une feute de cette dernière, pour assurer le maintien de la plaque support par rapport à cette patte.

Suivant un mode de réalisation, l'attache élastique comprend un corps par lequel elle est fixée sur la plaque support, et deux branches diamétralement opposées, s'étendant à partir de ce corps et destinées à coopérer par frottement sur une face de la patte de cadre.

Les deux branches comportent de préférence une surface convexe, destinée à entrer en contact avec la face arrière de la patte de cadre, cette surface convexe s'étendant de préférence suivant un arc de cercle.

De préférence également, les deux branches comportent des bords arrondis de façon à faciliter l'engagement du support sur la patte de cadre.

Suivant un autre mode de réalisation, l'attache élastique comporte une lame élastique portée par un plot fixé sur la plaque support, ladite lame élastique comportant une surface de retenue adaptée pour s'enclencher élastiquement sur un bord de la patte de cadre.

L'invention va être décrite plus en détail ci-dessous en se référant au dessin annexé donné uniquement à titre d'exemple et sur lequel:

— la Fig. 1 est une vue en élévation latérale d'une patte de cadre sur laquelle est montée une plaque support de dérailleur;
— la Fig. 2 est une vue en coupe suivant la ligne 2—2 de la Fig. 1;
— la Fig. 3 est une vue en élévation latérale de l'attache élastique utilisée dans le montage des Fig. 1 et 2;
— la Fig. 4 est une vue analogue à celle de la Fig. 1 d'une variante;
— la Fig. 5 est une vue en coupe suivant la ligne 5—5 de la Fig. 4;
— la Fig. 6 est une vue en élévation latérale d'une variante; et
— la Fig. 7 est une vue en coupe suivant la ligne 7—7 de la Fig. 6.

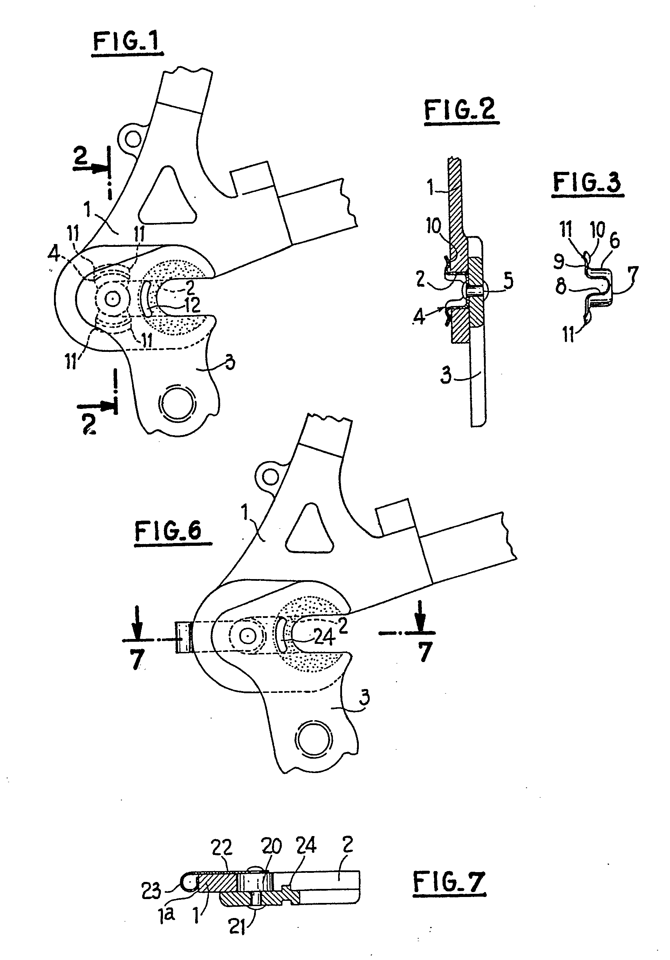

On voit sur la Fig. 1 une patte de cadre arrière 1 comportant une fente ou glissière 2 dans laquelle doivent être fixés d'une part, une plaque support de dérailleur 3 et, d'autre par, un moyeu de roue, non représenté.

La plaque support porte une attache élastique 4 fixée par exemple par un rivet 5 et qui est destinée à assurer sa fixation sur la patte de cadre. Cette attache comprend un corps 6 dont le fond 7 permet la fixation sur la plaque 3 et qui, dans l'exemple choisi, a une forme en partie cylindrique. En fait, le corps est formé de deux portions de cylindre séparées par deux échancrures 8. Ce corps est prolongé par deux branches 9 symétriques s'étendant à peu près radialement et comportant chacune une partie convexe 10 destinée à coopérer avec la face adjacente de la patte de cadre. Ces deux parties convexes s'étendent de préférence sur un arc de cercle centré sur l'axe du rivet 5. Par ailleurs, comme on le voit sur la Fig. 3, les bords extrêmes ou angles 11 des deux branches sont arrondis de façon à faciliter l'engagement de la plaque support dans la patte de cadre.

Cette attache est réalisée en acier à ressort.

La plaque support 3 comporte de plus une partie 12 en saillie sur sa face dirigée vers la patte de cadre et destinée à assurer son centrage par rapport à cette patte de cadre.

Un tel agencement permet de remédier efficacement aux inconvénients du dispositif classique. En effet, l'attache élastique 4 de construction très simple et par conséquent d'un coût peu élevé est fixée à demeure sur la plaque support, ce qui supprime toutes les opérations de serrage et de desserrage liées à l'utilisation d'un dispositif à vis et écrou.

Par ailleurs, la forme particulière donnée à cette attache permet, d'une part, un montage sur des pattes de cadre dont l'épaisseur peut varier par exemple entre 3,5 et 5 mm tout en ayant un effort de serrage à peu près constant, compte tenu de la forme convexe donnée aux parties actives des branches 9 de l'attache. En effet, grâce à cette forme particulière, le contact avec la surface adjacent de la patte de cadre s'effectue toujours dans les mêmes conditions, quelle que soit l'épaisseur de cette patte, dans les limites précisées ci-dessus.

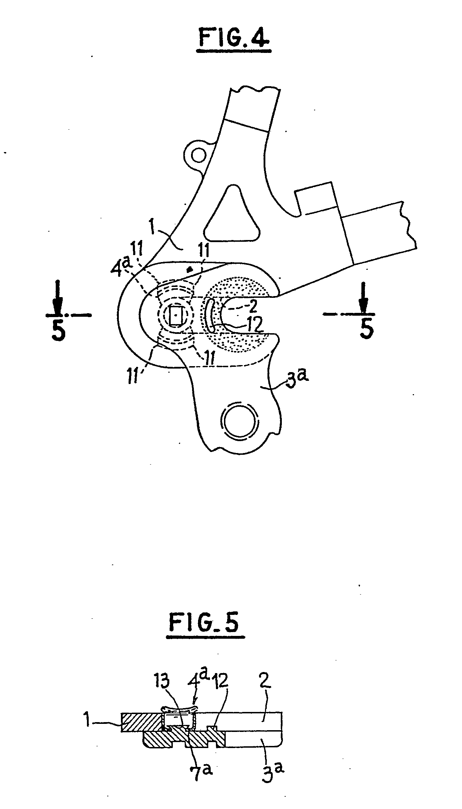

Sur les Fig. 4 et 5, l'attache élastique 4ᵃ comporte dans son fond 7ᵃ une ouverture de forme non circulaire, à peu près rectangulaire ou oblongue par exemple, qui reçoit une partie en saillie 13 de la plaque support. Cette saillie 13 a une forme correspondante et sert, après sertissage, d'organe de fixation de l'attache 4ᵃ sur la plaque 3ᵃ. Cette variante a l'avantage d'éliminer un rivet et de faciliter une fabrication automatisée. La saillie 13 est formée en même temps que la saillie de centrage 12.

Dans le mode de réalisation des Fig. 6 et 7, la plaque support porte un plot 20 fixé par exemple par rivetage, en 21, et sur lequel est également fixée une attache élastique 22 constituée ici par une lame en acier àr essort. Cette lame comporte à son extrémité libre une partie recourbée 23 ou toute autre saillie dirigée vers la plaque support. Comme dans l'exemple précédent, cette dernière comporte également un organe de centrage 24 par rapport à la patte support.

Le mode d'utilisation de cette variante est très simple: on engage le plot 20 dans la fente ou glissière 2 de la patte de cadre. En poursuivant le mouvement, l'attache élastique 22 se soulève et passe sur la patte de cadre pour ensuite retomber derrière le bord arrière 1ᵃ de cette dernière lorsque la plaque support a atteint sa position correcte.

Comme dans l'exemple précédent, la fixation de la plaque support par rapport à la patte de cadre est obtenue par des moyens très simples et très fiables, sans qu'il soit nécessaire d'effectuer un quelconque desserrage suivi d'un serrage.

Le gain réalisé, notamment lors du montage du dérailleur sur la patte de cadre est notable et tout risque de désolidarisation des attaches est exclu, lors des diverses manipulations, étant donné la fixation à demeure entre ces attaches élastiques et la plaque support.

## Revendications

1. Dispositif de fixation d'un support (3) de dérailleur sur une patte de cadre (1) de bicyclette le support comportant un moyeu de centrage (12, 24) par rapport à la patte de cadre, caractérisé en ce que ledit support (3) comporte par ailleurs, fixée à demeure, une attache élastique (4; 22) adaptée pour coopérer avec la patte de cadre dans une feute (2) de cette dernière, pour assurer la maintien du support par rapport à cette patte.

2. Dispositif suivant la revendication 1, caractérisé en ce que l'attache élastique (4) comprend un corps (6) par lequel elle est fixée sur le support (3), et deux branches (9) diamétralement opposées, s'étendant à partir de ce corps et destinées à coopérer par frottement sur une face de la patte de cadre (1).

3. Dispositif suivant la revendication 2, caractérisé en ce que le corps d'attache comporte un fond (7) et deux portions de cylindre (6) séparées par deux échancrures (8).

4. Dispositif suivant la revendication 2, caractérisé en ce que les deux branches (9) comportent une surface convexe (10) destinée à entrer en contact avec la face arrière adjacente de la patte de cadre (1).

5. Dispositif suivant la revendication 4, caractérisé en ce que cette surface convexe s'étend suivant un arc de cercle centré sur l'axe d'un organe de fixation (5) de l'attache (4) sur le support (3).

6. Dispositif suivant la revendication 2, caractérisé en ce que les deux branches (9) comportent des bords ou angles arrondis (11) de façon à faciliter l'engagement du support (3) sur la patte de cadre (1).

7. Dispositif suivant la revendication 1, caractérisé en ce que l'attache élastique (4) comporte une lame élastique (22) portée par un plot (20) fixé sur le support (3), ladite lame élastique comportant une surface de retenue (23) adaptée pour s'enclencher élastiquement sur un bord (1ᵃ) de la patte de cadre.

8. Dispositif suivant la l'une quelconque des revendications 2 à 7, caractérisé en ce que l'attache élastique (4) est fixée sur le support (3) par rivetage.

9. Dispositif suivant l'une quelconque des revendications 2 à 6, caractérisé en ce que l'attache élastique (4ᵃ) est fixée sur le support (3ᵃ) par sertissage d'une partie en saillie (13) prévue sur le support et qui s'étend dans une ouverture ménagé dans le fond (7ᵃ) de l'attache.

## Patentansprüche

1. Einrichtung zum Befestigen der Tragplatte (3) für einen Gangverstellhebel am Rahmenfuß (1) eines Fahrrades, wobei die Tragplatte mit Mitteln (12, 24) zum Zentrieren derselben gegenüber dem Rahmenfuß ausgestattet ist, dadurch gekennzeichnet, daß die Tragplatte (3) außerdem ein daran dauerhaft befestigtes elastisches Befestigungselement (4, 22) aufweist, welches mit dem Rahmenfuß zusammenwirkt und in einen Aufnahmeschlitz (2) desselben eingreift, um eine Befestigung der Tragplatte am Rahmenfuß zu gewährleisten.

2. Einrichtung nach Anspruch 1, dadurch gekennzeichnet, daß das elastische Befestigungselement (4) einen Körper (6) aufweist, welcher an der Tragplatte (3) befestigt ist, und zwei diametral gegenüberliegende Arme (9), welche von diesem Körper abstehen und welche dazu dienen, reibschlüssig mit einer Seite des Rahmenfußes (4) zusammenzuwirken.

3. Einrinchtung nach Anspruch 2, dadurch gekennzeichnet, daß der Körper des Befestigungselementes eine Bodenfläche (7) und zwei Zylinderabschnitte (6) aufweist, welche durch zwei Einschnitte voneinander getrennt sind.

4. Einrichtung nach Anspruch 2, dadurch gekennzeichnet, daß die beiden Arme (9) jeweils eine konvexe Anlagefläche (10) aufweisen, welche gegen die diesen zugewandten hinteren Flächen des Rahmenfußes (1) anliegen.

5. Einrichtung nach Anspruch 4, dadurch gekennzeichnet, daß die konvexe Anlagefläche kreisförmig ausgebildet ist mit einem Mittelpunkt, welcher mit der Achse eines Befestigungsorgans (5) für die Befestigung des Befestigungselements (4) an der Tragplatte (3) zusammenfällt.

6. Einrichtung nach Anspruch 2, dadurch gekennzeichnet, daß die beiden Arme (9) jeweils gewölbte Ränder bzw. Kanten (11) aufweisen, um das Einführen der Tragplatte (3) in den Rahmenfuß (1) zu erleichtern.

7. Einrichtung nach Anspruch 1, dadurch gekennzeichnet, daß das elastische Befestigungselement (4) einen elastischen Federbügel (22) aufweist, welcher von einem an der Tragplatte (3) befestigten Vorsprung (20) gehalten wird, wobei der elastische Federbügel mit einer Haltefläche (23) versehen ist, welche elastisch hinter eine Kante (1ᵃ) des Rahmenfußes greift.

8. Einrichtung nach einem der Ansprüche 2 bis 7, dadurch gekennzeichnet, daß das elastische Befestigungselement (4) durch Nieten an der Tragplatte (3) befestigt ist.

9. Einrichtung nach einem der Ansprüche 2 bis 6, dadurch gekennzeichnet, daß das elastische Befestigungselement (4ᵃ) mit der Tragplatte (3ᵃ) durch eine Fügeverbindung eines an der Tragplatte ausgebildeten Vorsprungs (13), welcher in eine in der Bodenfläche (7ᵃ) des Befestigungselementes ausgebildete Öffnung eingreift, verbunden ist.

## Claims

1. A device for fixing a derailleur support (3) on a bicycle frame lug (1), the support including a centering hub (12, 24) for centering it relative to the frame lug, characterized in that said support (3) further comprises, permanently fixed thereon, an elastically yieldable fastener (4; 22) which is adapted to cooperate with the frame lug, in a slot (2) of the latter, and ensure that the support is maintained relative to this lug.

2. A device according to claim 1, characterized in that the elastically yieldable fastener (4) comprises a body (6) whereby it is fixed to the support (3), and two diametrically opposed branches (9) which extend from this body and are adapted to cooperate frictionally with one side of the frame lug (1).

3. A device according to claim 2, characterized in that the fastener body comprises an end wall (7) and two portions of a cylinder (6) separated by two notches (8).

4. A device according to claim 2, characterized in that the two branches (9) include a convex surface (10) adapted to come into contact with the adjacent rear side of the frame lug (1). `

5. A device according to claim 4, characterized in that this convex surface extends on an arc of a circle centered on the axis of means (5) for fixing the fastener (4) on the support (3).

6. A device according to claim 2, characterized in that the two branches (9) have rounded edges or corners (11) so as to facilitate the engagement of the support (3) on the frame lug (1).

7. A device according to claim 1, characterized in that the elastically yieldable fastener (4) comprises an elastically yieldable strip (22) carried by a stud (20) fixed to the support (3), said elastically yieldable strip having a retaining surface (23) adapted to clip elastically onto an edge (1ᵃ) of the frame lug.

8. A device according to any one of the claims 2 to 7, characterized in that the elastically yieldable fastener (4) is fixed to the support (3) by riveting.

9. A device according to any one of the claims 2 to 6, characterized in that the elastically yieldable fastener (4ᵃ) is fixed to the support (3ᵃ) by a forming over operation on a projecting portion (13) provided on the support and extending into an opening formed in the end wall (7ᵃ) of the fastener.

FIG.1

FIG.2

FIG.3

FIG.6

FIG.7

# FIG.4

# FIG.5